# EUROPEAN PATENT APPLICATION

(11) **EP 4 730 419 A1**
(43) Date of publication of application: **22.04.2026**
(21) Application number: 25205859.9
(22) Date of filing: 30.09.2025
(51) Int. Cl.: H01M 4/131, H01M 4/36, H01M 4/505, H01M 4/525, H01M 10/0525

(54) **POSITIVE ELECTRODE ACTIVE MATERIALS, POSITIVE ELECTRODES, AND RECHARGEABLE LITHIUM BATTERIES**

(30) Priority: 15.10.2024 KR 20240140560
(71) Applicant: SAMSUNG SDI CO., LTD., Yongin-si, Gyeonggi-do 17084 (KR)
(72) Inventor: CHO, Yongmok, Yongin-si, Gyeonggi-do 17084 (KR); CHOI, Minjae, Yongin-si, Gyeonggi-do 17084 (KR); CHUNG, Hyunjei, Yongin-si, Gyeonggi-do 17084 (KR); LEE, Sangheon, Yongin-si, Gyeonggi-do 17084 (KR)
(74) Representative: Marks & Clerk LLP

(57) **Abstract**

In some example embodiments, a positive electrode active material includes a first positive electrode active material including a lithium cobalt-based composite oxide and having an average particle diameter (D₅₀) of about 15 µm to about 20 µm; and a second positive electrode active material including a lithium nickel-cobalt-manganese-based composite oxide and having an average particle diameter (D₅₀) of about 3 µm to about 10 µm; wherein the second positive electrode active material is included in an amount of about 10 wt% to about 25 wt% based on a total of 100 wt% of the first positive electrode active material and the second positive electrode active material, and in the lithium nickel-cobalt manganese-based composite oxide, based on 100 mol% of a total metal excluding lithium, a nickel content is about 55 mol% to about 60 mol% and a cobalt content is greater than or equal to about 20 mol%.

## Description

### BACKGROUND

### 1. Field

Positive electrode active materials, positive electrodes including the same, and rechargeable lithium batteries are disclosed.

### 2. Description of the Related Art

A portable information device such as a cell phone, a laptop, smart phone, and the like and/or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to the above-referenced uses. Among them, lithium nickel-based oxide, lithium nickel manganese cobalt-based composite oxide, lithium nickel cobalt aluminium-based composite oxide, and lithium cobalt oxide-based are mainly or predominantly utilized as positive electrode active materials. With the rapidly increasing demand for large-sized, high-capacity, and/or high-energy-density rechargeable lithium batteries, there is an interest in developing positive electrode active materials that concurrently (e.g., simultaneously) improve stability and performance.

### SUMMARY

Provided are a positive electrode active material capable of realizing high density, high capacity, long cycle-life characteristics and high energy density, and a positive electrode and a rechargeable lithium battery using the same.

In some example embodiments of the present disclosure, a positive electrode active material includes a first positive electrode active material including a lithium cobalt-based composite oxide and having an average particle diameter (D₅₀) of about 15 µm to about 20 µm; and a second positive electrode active material including a lithium nickel-cobalt-manganese-based composite oxide and having an average particle diameter (D₅₀) of about 3 µm to about 10 µm; wherein, the second positive electrode active material is included in an amount of about 10 wt% to about 25 wt% based on a total of 100 wt% of the first positive electrode active material and the second positive electrode active material, and, in the lithium nickel-cobalt-manganese-based composite oxide, based on 100 mol% of a total metal excluding lithium, a nickel content is about 55 mol% to about 60 mol% and a cobalt content is greater than or equal to about 20 mol%.

In some example embodiments, a positive electrode includes a current collector; and a positive electrode active material layer on the current collector; wherein the positive electrode active material layer includes the positive electrode active material.

In some example embodiments, a rechargeable lithium battery includes the positive electrode; a negative electrode; and an electrolyte.

At least some of the above and other features of the invention are set out in the claims.

The positive electrode active material according to some example embodiments maximizes or increases capacity while minimizing or reducing production cost, thereby ensuring long-life characteristics and improving high-voltage characteristics and high-temperature storage characteristics. A rechargeable lithium battery using the above-mentioned positive electrode active material may exhibit high initial charge/discharge capacity and efficiency even under high-voltage driving conditions, can realize high energy density due to high pellet density, and can realize long cycle-life characteristics.

### BRIEF DESCRIPTION OF THE DRAWINGS

The above and other aspects and features of certain embodiments of the present disclosure will become more apparent from the following description taken in conjunction with the accompanying drawings.
FIG. 1 is a perspective view schematically showing a rechargeable lithium battery according to an example embodiment.
FIG. 2 is a cross-sectional view schematically showing a rechargeable lithium battery according to an example embodiment.
FIGS. 3 and 4 are perspective views schematically showing rechargeable lithium batteries according to some example embodiments.

### DETAILED DESCRIPTION

Hereinafter, example embodiments will be described in more detail so that those of ordinary skill in the art can easily implement them. However, the subject matter of this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

It should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, "layer" herein includes not only a shape on the whole surface if (e.g., when) viewed from a plan view, but also a shape on a partial surface.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the term "and/or" or "or" includes any and all combinations of one or more of the associated listed items.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, if (e.g., when) a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

In embodiments, "or" is not to be construed as an exclusive meaning (e.g., in a disjunctive sense), for example, "A or B" may be construed to include A, B, A+B, and/or the like.

As used herein, the term "metal" is to be interpreted as a concept including ordinary metals, transition metals and metalloids (semi-metals).

### Positive Electrode Active Material

In some example embodiments, a positive electrode active material includes a first positive electrode active material including a lithium cobalt-based composite oxide and having an average particle diameter (D₅₀) of about 15 µm to about 20 µm; and a second positive electrode active material including a lithium nickel-cobalt-manganese-based composite oxide and having an average particle diameter (D₅₀) of about 3 µm to about 10 µm; wherein the second positive electrode active material is included in an amount of about 10 wt% to about 25 wt% (e.g., about 11 wt% to about 24 wt%, about 12 wt% to about 23 wt%, about 13 wt% to about 22 wt%, about 14 wt% to about 21 wt%, about 15 wt% to about 20 wt%, about 16 wt% to about 20 wt%, about 17 wt% to about 20 wt%, about 18 wt% to about 20 wt%, about 20 wt% to about 25 wt%, about 20 wt% to about 24 wt%, about 10 wt% to about 23 wt%, or about 20 wt% to about 22 wt%) based on a total of 100 wt% of the first positive electrode active material and the second positive electrode active material, and, in the lithium nickel-cobalt-manganese-based composite oxide, based on 100 mol% of a total metal excluding lithium, a nickel content is about 55 mol% to about 60 mol% (e.g., about 55 mol%, about 56 mol%, about 57 mol%, about 58 mol%, about 59 mol%, or about 60 mol%) and a cobalt content is greater than or equal to about 20 mol% (e.g., about 20 mol% to about 30 mol%, about 20 mol% to about 29 mol%, about 20 mol% to about 28 mol%, about 20 mol% to about 27 mol%, about 20 mol% to about 26 mol%, about 20 mol% to about 25 mol%, about 20 mol% to about 24 mol%, about 20 mol% to about 23 mol%, or about 20 mol% to about 22 mol%).

In some example embodiments, a positive electrode active material including a lithium cobalt-based composite oxide and a lithium nickel-cobalt-manganese-based composite oxide having a smaller particle diameter than the positive electrode active material including the lithium cobalt-based composite oxide are used, and by finely controlling the respective amounts and compositions, the price of the positive electrode active material is reduced while ensuring structural stability at high voltage, and at substantially the same time, successfully improving capacity, resistance (e.g., electrical resistance), and cycle-life characteristics at high voltage.

### First Positive Electrode Active Material

According to some example embodiments, a first positive electrode active material includes a lithium cobalt-based composite oxide and has an average particle diameter (D₅₀) of about 15 µm to about 20 µm.

The lithium cobalt-based composite oxide may be represented by Chemical Formula 1.

[Chemical Formula 1] Liₐ₁Coₓ₁M¹_{y1}O_{2-b1}X_{b1}

In Chemical Formula 1, 0.9 ≤ a1 ≤ 1.8, 0.8 ≤ x1 ≤ 1.0, 0 ≤ y1 ≤ 0.2, 0.9≤ x1+y1 ≤ 1.1, and 0≤b1≤0.1, M¹ is one or more elements selected from B, Ba, Ca, Ce, Cr, Cu, Fe, Mg, Mn, Mo, Nb, Si, Sn, Sr, Ti, V, W, Y, Zn, and Zr, and X is one or more elements selected from F, P, and S.

In Chemical Formula 1, for example, 0.9 ≤ a1 ≤ 1.5, or 0.9 ≤a1 ≤ 1.2. In embodiments, for example, 0.8<x1 ≤ 0.99, 0.82 ≤ x1 ≤ 0.99, 0.84 ≤ x1 ≤ 0.99, 0.86 ≤ x1 ≤ 0.99, 0.88 ≤ x1 ≤ 0.98, 0.9 ≤ x1 ≤ 1.0, or 0.9 ≤ x1 ≤ 0.97, and 0 ≤ y1 ≤ 0.1, 0<y1 ≤ 0.1, 0.001 ≤ y1 ≤ 0.075, 0.001<y1 ≤ 0.05, or 0.001<y1 ≤ 0.025.

The first positive electrode active material is in the form of particles, and the average particle diameter (D₅₀) of the particles is about 15 µm to about 20 µm, for example, about 15 µm to about 18 µm, or about 15 µm to about 16 µm. The first positive electrode active material is used in combination with a second positive electrode active material including a lithium nickel-cobalt-manganese-based composite oxide to be further described herein, and the capacity and energy density can be maximized or increased while improving the cycle-life characteristics. In embodiments, the average particle diameter (D₅₀) may be obtained by randomly measuring the size (diameter or major axis length) of about 20 particles from a scanning electron microscope image of the positive electrode active materials to obtain a particle size distribution, and taking the diameter of the particles having a cumulative volume of 50% by volume from the particle size distribution as the average particle diameter.

The shape of the first positive electrode active material may be an irregular shape, a sphere, an elliptical sphere, and/or the like.

### Second Positive Electrode Active Material

The second positive electrode active material according to some example embodiments includes a lithium nickel-cobalt-manganese-based composite oxide and has an average particle diameter (D₅₀) of about 3 µm to about 10 µm.

The lithium nickel-cobalt-manganese-based composite oxide may be represented by Chemical Formula 2.

[Chemical Formula 2] Liₐ₂Niₓ₂Co_{y2}Mn_{z2}M²_{w2}O_{2-b2}X_{b2}

In Chemical Formula 2, 0.9 ≤ a2 ≤ 1.2, 0.55 ≤ x2 ≤ 0.60, 0.20 ≤ y2 ≤ 0.45, 0 ≤ z2 ≤ 0.25, 0 ≤ w2 ≤ 0.25, 0.9 ≤ x2+y2+z2+w2 ≤ 1.1, and 0 ≤ b2 ≤ 0.1, M² is one or more elements selected from Al, B, Ba, Ca, Ce, Cr, Cu, Fe, Mg, Mo, Nb, Si, Sn, Sr, Ti, V, W, Y, and Zr, and X is one or more elements selected from F, P, and S.

In Chemical Formula 2, for example, 0.55 ≤ x2 ≤ 0.60, 0.20 ≤ y2 ≤ 0.25, 0.20 ≤ z2 ≤ 0.25, and 0 ≤ w2 ≤ 0.05.

In the lithium nickel-cobalt-manganese-based composite oxide, based on 100 mol% of a total metal excluding lithium, a nickel content is about 55 mol% to about 60 mol%. If (e.g., when) the nickel content satisfies the above range, high capacity can be achieved and structural stability can be improved even if (e.g., when) the cobalt content is reduced.

In the lithium nickel-cobalt-manganese-based composite oxide, the cobalt content based on 100 mol% of a total metal excluding lithium is greater than or equal to about 20 mol%, for example, about 20 mol% to about 40 mol%, about 20 mol% to about 35 mol%, about 20 mol% to about 30 mol%, or about 20 mol% to about 25 mol%. If (e.g., when) the cobalt content satisfies the above ranges, high capacity may be achieved and structural stability can be improved.

In the lithium nickel-cobalt-manganese-based composite oxide, the manganese content based on 100 mol% of a total metal excluding lithium may be greater than or equal to about 20 mol%, for example, about 20 mol% to about 40 mol%, about 20 mol% to about 35 mol%, about 20 mol% to about 30 mol%, or about 20 mol% to about 25 mol%. If (e.g., when) the manganese content satisfies the above ranges, the positive electrode active material can realize high capacity while improving structural stability.

The lithium nickel-cobalt-manganese-based composite oxide may be, for example, a lithium nickel-cobalt-manganese-aluminium-based composite oxide that further contains aluminium in addition to nickel, cobalt, and manganese. The aluminium content based on 100 mol% of a total metal excluding lithium in the lithium nickel-cobalt-manganese-aluminium-based composite oxide may be greater than or equal to about 0.1 mol%, greater than or equal to about 0.5 mol%, or greater than or equal to about 1.0 mol%, for example, about 0.1 mol% to about 1.5 mol%, about 0.3 mol% to about 1.2 mol%, about 0.3 mol% to about 1.0 mol%, about 0.5 mol% to about 1.0 mol%, or about 0.7 mol% to about 0.9 mol%. If (e.g., when) the aluminium content satisfies the above ranges, a stable layered structure can be maintained, the problem of the structure collapsing due to charge and discharge can be suppressed or reduced, and the long cycle-life characteristics of the positive electrode active material can be implemented.

In the lithium nickel-cobalt-manganese-aluminium-based composite oxide, the nickel content based on 100 mol% of a total metal excluding lithium is about 55 mol% to about 60 mol%. If (e.g., when) the nickel content satisfies the above range, high capacity can be achieved and structural stability can be improved even if (e.g., when) the cobalt content is reduced.

In the lithium nickel-cobalt-manganese-aluminium-based composite oxide, the cobalt content based on 100 mol% of a total metal excluding lithium is greater than or equal to about 20 mol%, for example, about 20 mol% to about 40 mol%, about 20 mol% to about 35 mol%, about 20 mol% to about 30 mol%, or about 20 mol% to about 25 mol%. If (e.g., when) the cobalt content satisfies the above ranges, high capacity can be achieved and structural stability can be improved.

In the lithium nickel-cobalt-manganese-aluminium-based composite oxide, the manganese content based on 100 mol% of a total metal excluding lithium may be greater than or equal to about 20 mol%, for example, about 20 mol% to about 40 mol%, about 20 mol% to about 35 mol%, about 20 mol% to about 30 mol%, or about 20 mol% to about 25 mol%. If (e.g., when) the manganese content satisfies the above ranges, the positive electrode active material can realize high capacity while improving structural stability.

The lithium nickel-cobalt-manganese-based composite oxide may be in a form of secondary particles formed by agglomeration of a plurality of primary particles, single particles, or a combination thereof. The secondary particles and single particles may be spherical, elliptical, polyhedral, or irregular in shape, and primary particles constituting the secondary particles may be spherical, elliptical, plate-shaped, or a combination thereof.

For example, the second positive electrode active material may be in the form of single particles. The single particles may exist alone without a grain boundary within the particle, is composed of one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist alone, or single particles may be attached together. For example, 2 to 10 single particles may be attached and in contact with each other.

An average particle diameter (D₅₀) of the second positive electrode active material is about 3 µm to about 10 µm, for example, about 3 µm to about 8 µm, or about 3 µm to about 5 µm. As used herein, the term average particle diameter (D₅₀) means a diameter of particles having a cumulative volume of 50 volume% in the particle size distribution that is obtained by measuring the size (diameter or major axis length) of about 20 particles at random in a scanning electron microscope image for second positive electrode active materials.

The first positive electrode active material may be included in an amount of about 75 wt% to about 90 wt%, for example, about 75 wt% to about 85 wt%, or about 75 wt% to about 82 wt%, based on total 100 wt% of the first positive electrode active material and the second positive electrode active material. In embodiments, the second positive electrode active material is included in an amount of about 10 wt% to about 25 wt%, for example, about 15 wt% to about 25 wt%, about 12 wt% to about 23 wt%, about 15 wt% to about 20 wt%, about 20 wt% to about 25 wt% or about 18 wt% to about 25 wt%, based on total 100 wt% of the first positive electrode active material and the second positive electrode active material. If (e.g., when) mixed in the above ratio, high capacity can be achieved while maximizing or increasing energy density.

The positive electrode active material according to some example embodiments may realize a high pellet density. For example, the pellet density of the positive electrode active material may be about 4.1 g/cc to about 4.5 g/cc, for example about 4.15 g/cc to about 4.4 g/cc, about 4.15 g/cc to about 4.3 g/cc, or about 4.15 g/cc to about 4.25 g/cc. A rechargeable lithium battery using the positive electrode active materials can achieve high energy density.

### Positive Electrode

In some example embodiments, a positive electrode includes a current collector and a positive electrode active material layer on the current collector, wherein the positive electrode active material layer includes the aforementioned positive electrode active material. The positive electrode active material layer may further include other types (or kinds) of positive electrode active materials in addition to the aforementioned positive electrode active material. In embodiments, the positive electrode active material layer may optionally further include a binder, a conductive material (e.g., an electrically conductive material), or a combination thereof.

According to some example embodiments, a loading level of the positive electrode active material layer may be about 10 mg/cm² to about 40 mg/cm², for example about 10 mg/cm² to about 30 mg/cm², or about 10 mg/cm² to about 20 mg/cm². In embodiments, a mixture density of the positive electrode active material layer in the finally compressed positive electrode may be about 4.2 g/cc to about 4.5 g/cc, for example about 4.2 g/cc to about 4.4 g/cc or about 4.2 g/cc to about 4.3 g/cc. If (e.g., when) applying a positive electrode active material according to some example embodiments, it is advantageous to implement such loading level and mixture density, and a positive electrode satisfying the loading level and mixture density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

Each amount of the binder and the conductive material may be about 0.5 wt% to about 5 wt%, based on 100 wt% of the positive electrode active material layer.

The positive electrode current collector may include Al foil, but is not limited thereto.

### Rechargeable Lithium Battery

Some example embodiments provide a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

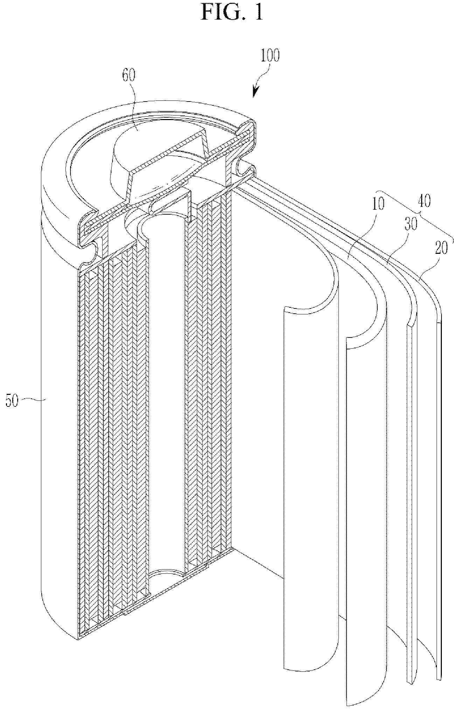

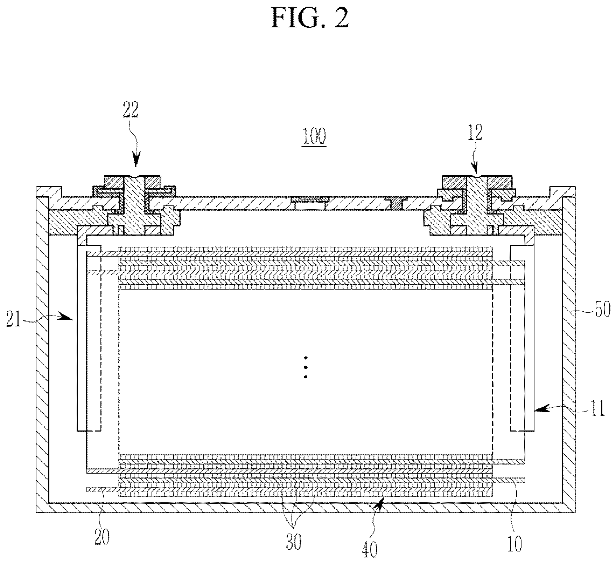

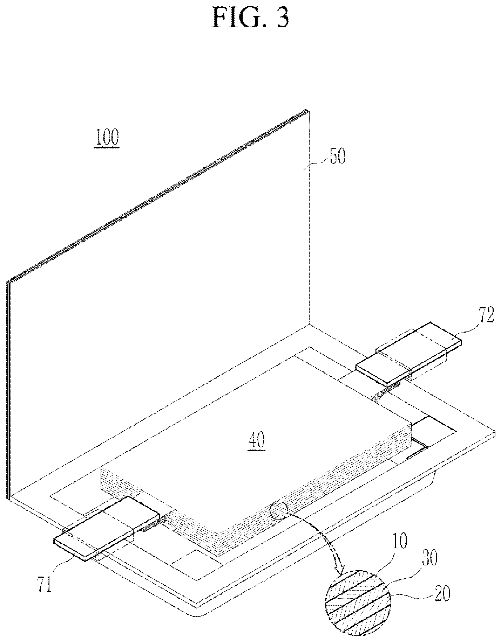

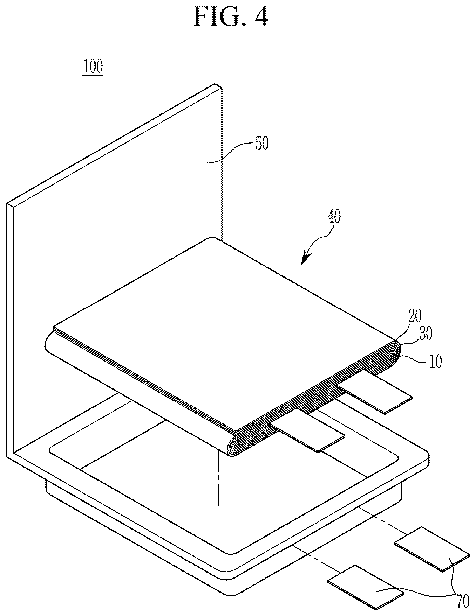

The rechargeable lithium battery may be classified into cylindrical, prismatic, pouch, coin, and/or the like depending on the shape. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path for inducing the current formed in the electrode assembly 40 to the outside.

### Negative Electrode

The negative electrode may include a current collector and a negative electrode active material layer on the current collector, and may further include a negative electrode active material, a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0<x ≤ 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If the silicon-carbon composite includes silicon and amorphous carbon, an amount of silicon may be about 10 wt% to about 50 wt% and an amount of amorphous carbon may be about 50 wt% to about 90 wt% based on 100 wt% of the silicon-carbon composite. In embodiments, if the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x ≤ 2). In embodiments, the atomic content ratio of Si:O, which indicates a degree of oxidation, may be about 99:1 to about 33:67. As used herein, if (e.g., when) a definition is not otherwise provided, an average particle diameter (D₅₀) indicates a particle where a cumulative volume is about 50 volume% in a particle size distribution.

The Si-based negative electrode active material and/or Sn-based negative electrode active material may be mixed with the carbon-based negative electrode active material. If (e.g., when) the Si-based negative electrode active material and/or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming a fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material based on 100 wt% of the negative electrode active material layer.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium to transmit ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types, and if (e.g., when) two or more types or kinds are used in a mixture, a mixing ratio can be suitably or appropriately adjusted according to suitable or desired battery performance, which should be readily recognizable to a person having ordinary skill in the upon reviewing this disclosure.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within the above range, the electrolyte solution has suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

### (1) Preparation of First Positive Electrode Active Material

Co₃O₄ and Li₂CO₃ were mixed in a mole ratio of Co:Li=1:1.04 and then, heat-treated at 1050 °C for 8 hours under an air atmosphere to prepare a first positive electrode active material including a lithium cobalt-based composite oxide with a composition of Li_{1.04}CoO₂ and having an average particle diameter (D₅₀) of about 16 µm.

### (2) Preparation of Second Positive Electrode Active Material

Ni_{0.55}Co_{0.20}Mn_{0.25}(OH)₂ and Li₂CO₃ were mixed in a mole ratio of (Ni+Co+Mn):Li=1:1.05 and then, heat-treated at 900 °C for 8 hours under an air atmosphere second positive electrode active material including a lithium nickel-cobalt-manganese-based composite oxide with a composition of Li_{1.05}Ni_{0.55}Co_{0.20}Mn_{0.25}O₂ in the form of single particles with an average particle diameter (D₅₀) of about 3.8 µm.

### (3) Preparation of Final Positive Electrode Active Material

80 wt% of the first positive electrode active material and 20 wt% of the second positive electrode active material were mixed to prepare a final positive electrode active material.

### 2. Manufacturing of Rechargeable Lithium Battery Cell

98.5 wt% of the prepared final positive electrode active material, 1.0 wt% of a polyvinylidene fluoride binder, and 0.5 wt% of a carbon nanotube conductive material were mixed to prepare a positive electrode active material layer slurry, and the positive electrode active material layer slurry was coated on an aluminium foil current collector and then, dried and compressed to manufacture a positive electrode.

After interposing a polytetrafluoroethylene separator between the positive electrode and a lithium metal counter electrode, an electrolyte solution prepared by dissolving 1 M LiPF₆ in a mixed solvent of ethylene carbonate and dimethyl carbonate in a volume ratio of 3:7 was used to manufacture a rechargeable lithium battery cell (half-cell) according to a general method.

### Example 2

A positive electrode active material and a rechargeable lithium battery cell were manufactured in substantially the same manner as in Example 1 except that the composition of the lithium nickel-cobalt-manganese-based composite oxide was changed as shown in Table 1 in preparing the second positive electrode active material.

### Example 3

A positive electrode active material and a rechargeable lithium battery cell were manufactured in substantially the same manner as in Example 1 except that the second positive electrode active material including a lithium nickel-cobalt-manganese-based composite oxide was prepared to have a composition of Li_{1.05}Ni_{0.55}Co_{0.20}Mn_{0.245}Al_{0.005}O₂ by using Ni_{0.55}Co_{0.20}Mn_{0.245}Al_{0.005}(OH)₂ instead of the Ni_{0.55}Co_{0.20}Mn_{0.25}(OH)₂.

### Examples 4 to 6

A positive electrode active material and a rechargeable lithium battery cell were manufactured in substantially the same manner as in Example 3 except that the composition of the lithium nickel-cobalt-manganese-based composite oxide was changed as shown in Table 1 in preparing the second positive electrode active material.

### Comparative Examples 1 to 5

A positive electrode active material and a rechargeable lithium battery cell were manufactured in substantially the same manner as in Example 1 except that the composition of the lithium nickel-cobalt-manganese-based composite oxide was changed as shown in Table 1 in preparing the second positive electrode active material.

### Comparative Example 6

A positive electrode active material and a rechargeable lithium battery cell were manufactured in substantially the same manner as in Example 1 except that 70 wt% of the first positive electrode active material and 30 wt% of the second positive electrode active material were mixed in preparing the final positive electrode active material.

### Evaluation Example 1: Pellet Density of Positive Electrode Active Material

The pellet density of the positive electrode active materials prepared according to the Examples and Comparative Examples was measured, and the results are shown in Table 1. The positive electrode active material was weighed and taken by 3 g and then, put into a mold (an area: about 1.298 cm²), and a mold bar was slowly inserted into a mold body. After placing the mold set in a hydraulic press and then, pressing it with a pressure of about 9 tons (Metric ton) for about 30 seconds, its height was measured to obtain the pellet density.

### Evaluation Example 2: Mixture Density of Positive Electrode

The mixture density of the positive electrodes manufactured in Examples and Comparative Examples was measured, and the results are shown in Table 1. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume.

**Table 1**

| | Ni (mol%) | Co (mol%) | Mn (mol%) | Al (mol%) | Pellet density (g/cc) | Mixture density (g/cc) |
|---|---|---|---|---|---|---|
| Example 1 | 55 | 20 | 25 | 0 | 4.19 | 4.25 |
| Example 2 | 60 | 20 | 20 | 0 | 4.19 | 4.24 |
| Example 3 | 55 | 20 | 24.5 | 0.5 | 4.19 | 4.24 |
| Example 4 | 55 | 20 | 24.3 | 0.7 | 4.20 | 4.25 |
| Example 5 | 55 | 20 | 24.1 | 0.9 | 4.18 | 4.25 |
| Example 6 | 55 | 20 | 23.9 | 1.1 | 4.20 | 4.26 |
| Comparative Example 1 | 65 | 20 | 15 | 0 | 4.18 | 4.25 |
| Comparative Example 2 | 50 | 20 | 30 | 0 | 4.18 | 4.23 |
| Comparative Example 3 | 55 | 15 | 30 | 0 | 4.18 | 4.23 |
| Comparative Example 4 | 60 | 10 | 30 | 0 | 4.19 | 4.24 |
| Comparative Example 5 | 60 | 15 | 25 | 0 | 4.20 | 4.24 |
| Comparative Example 6 | 55 | 20 | 25 | 0 | 4.12 | 4.15 |

Referring to Table 1, the Examples, which included 10 wt% to 25 wt% of the second positive electrode active material based on a total of 100 wt% of the first and second positive electrode active materials wherein the lithium nickel-cobalt manganese-based composite oxide had a nickel content of about 55 mol% to about 60 mol% and a cobalt content of greater than or equal to about 20 mol% based on 100 mol% of the total metal excluding lithium, exhibited equivalent pellet density and mixture density to those of Comparative Examples 1 and 2, wherein the lithium nickel-cobalt manganese-based composite oxide had a nickel content out of the range of 55 mol% to 60 mol%, and Comparative Examples 3 to 5, wherein the lithium nickel-cobalt manganese-based composite oxide had a cobalt content of less than 20 mol%.

However, Comparative Example 6, which included the second positive electrode active material out of the range of 10 wt% to 25 wt% based on total 100 wt% of the first and second positive electrode active materials, was confirmed to exhibit lower pellet density and mixture density than Examples.

### Evaluation Example 3: Evaluation of Initial Charge/Discharge Capacity and Efficiency

The rechargeable lithium battery cells according to Examples and the comparative examples were charged to an upper limit voltage of 4.55 V at a constant current of 0.2 C and to 0.05 C at a constant voltage and then, discharged to a cut-off voltage of 3.0 V at 0.2 C at 25 °C to proceed with initial charge and discharge. Table 2 shows initial discharge capacity (0.2 C discharge) and efficiency obtained by calculating a ratio of the initial discharge capacity to initial charge capacity.

### Evaluation Example 4: High-temperature Cycle-life Characteristics

After the initial charge and discharge of Evaluation Example 3, the cells were 50 cycles or more charged at 0.35 C and discharged at 0.35 C within a voltage range of 3.0 V to 4.55 V at 45 °C to calculate a ratio of 50^{th} cycle discharge capacity to the initial discharge capacity, as high-temperature cycle-life characteristics (cycle-life), which is shown in Table 2.

**Table 2**

| | Ni (mol%) | Co (mol%) | Mn (mol%) | Al (mol%) | 0.2 C discharge (mAh/g) | Effici ency (%) | Cycle-life (%, 45 °C, 50 cyc) |
|---|---|---|---|---|---|---|---|
| Example 1 | 55 | 20 | 25 | 0 | 191.3 | 90.8 | 80.0 |
| Example 2 | 60 | 20 | 20 | 0 | 191.3 | 91.0 | 80.5 |
| Example 3 | 55 | 20 | 24.5 | 0.5 | 190.3 | 90.7 | 80.5 |
| Example 4 | 55 | 20 | 24.3 | 0.7 | 189.7 | 90.5 | 80.7 |
| Example 5 | 55 | 20 | 24.1 | 0.9 | 189.2 | 90.3 | 80.8 |
| Example 6 | 55 | 20 | 23.9 | 1.1 | 188.0 | 90.3 | 81.0 |
| Comparative Example 1 | 65 | 20 | 15 | 0 | 192.8 | 90.8 | 70.5 |
| Comparative Example 2 | 50 | 20 | 30 | 0 | 188.0 | 91.2 | 75.8 |
| Comparative Example 3 | 55 | 15 | 30 | 0 | 190.3 | 91.0 | 69.9 |
| Comparative Example 4 | 60 | 10 | 30 | 0 | 191.4 | 90.5 | 70.8 |
| Comparative Example 5 | 60 | 15 | 25 | 0 | 192.0 | 90.3 | 72.5 |
| Comparative Example 6 | 55 | 20 | 25 | 0 | 192.6 | 90.1 | 74.0 |

Referring to Table 2, the examples, which included 10 wt% to 25 wt% of the second positive electrode active material based on total 100 wt% of the first and second positive electrode active materials, wherein the lithium nickel-cobalt manganese-based composite oxide had about 55 mol% to about 60 mol% of a nickel content and greater than or equal to about 20 mol% of a cobalt content based on 100 mol% of a total metal excluding lithium, exhibited equivalent efficiency and excellent high temperature cycle-life characteristics on the interior surface, compared with Comparative Examples 1 and 2, wherein the lithium nickel-cobalt manganese-based composite oxide had a nickel content out of the range of 55 mol% to 60 mol%, and Comparative Examples 3 to 5, wherein the lithium nickel-cobalt manganese-based composite oxide had a cobalt content of less than 20 mol%, and Comparative Example 6, which included the second positive electrode active material out of the range of 10 wt% to 25 wt% based on total 100 wt% of the first and second positive electrode active materials.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the scope of the appended claims, and equivalents thereof.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a first positive electrode active material comprising a lithium cobalt-based composite oxide and having an average particle diameter (D₅₀) of about 15 µm to about 20 µm; and
a second positive electrode active material comprising a lithium nickel-cobalt-manganese-based composite oxide and having an average particle diameter (D₅₀) of about 3 µm to about 10 µm;
wherein the second positive electrode active material is included in an amount of about 10 wt% to about 25 wt% based on a total of 100 wt% of the first positive electrode active material and the second positive electrode active material, and
in the lithium nickel-cobalt-manganese-based composite oxide, based on 100 mol% of a total metal excluding lithium, a nickel content is about 55 mol% to about 60 mol% and a cobalt content is greater than or equal to about 20 mol%.

2. The positive electrode active material as claimed in claim 1, wherein:
the lithium cobalt-based composite oxide is represented by Chemical Formula 1:
[Chemical Formula 1] Liₐ₁COx₁M¹_{y1}O_{2-b1}X_{b1}
wherein in Chemical Formula 1, 0.9 ≤ a1 ≤ 1.8, 0.8 ≤ x1 ≤ 1.0, 0 ≤ y1 ≤ 0.2, 0.9 ≤ x1+y1 ≤ 1.1, and 0≤b1≤0.1, M¹ is one or more elements selected from B, Ba, Ca, Ce, Cr, Cu, Fe, Mg, Mn, Mo, Nb, Si, Sn, Sr, Ti, V, W, Y, Zn, and Zr, and X is one or more elements selected from F, P, and S.

3. The positive electrode active material as claimed in claim 1 or claim 2, wherein:
in the lithium nickel-cobalt-manganese-based composite oxide, a cobalt content based on 100 mol% of a total metal excluding lithium is about 20 mol% to about 25 mol%.

4. The positive electrode active material as claimed in claim 3, wherein:
in the lithium nickel-cobalt-manganese-based composite oxide, a manganese content based on 100 mol% of a total metal excluding lithium is about 20 mol% to about 25 mol%.

5. The positive electrode active material as claimed in any one of claims 1 to 4, wherein:
the lithium nickel-cobalt-manganese-based composite oxide is represented by Chemical Formula 2:
[Chemical Formula 2] Liₐ₂Niₓ₂Co_{y2}Mn_{z2}M²_{w2}O_{2-b2}X_{b2}
wherein in Chemical Formula 2, 0.9 ≤ a2 ≤ 1.2, 0.55≤ x2 ≤ 0.60, 0.20 ≤ y2 ≤ 0.45, 0 ≤ z2 ≤ 0.25, 0 ≤ w2 ≤ 0.25, 0.9 ≤ x2+y2+z2+w2 ≤ 1.1, and 0 ≤ b2 ≤ 0.1, M² is one or more elements selected from Al, B, Ba, Ca, Ce, Cr, Cu, Fe, Mg, Mo, Nb, Si, Sn, Sr, Ti, V, Y, W, and Zr, and X is one or more elements selected from F, P, and S.

6. The positive electrode active material as claimed in any one of claims 1 to 5, wherein:
the lithium nickel-cobalt-manganese-based composite oxide further comprises aluminium.

7. The positive electrode active material as claimed in claim 6, wherein:
(i) in the lithium nickel-cobalt-manganese-based composite oxide, an aluminium content based on 100 mol% of a total metal excluding lithium is about 0.1 mol% to about 1.5 mol%; or
(ii) in the lithium nickel-cobalt-manganese-based composite oxide, an aluminium content based on 100 mol% of a total metal excluding lithium is about 0.5 mol% to about 1.0 mol%.

8. The positive electrode active material as claimed in claim 6 or claim 7, wherein:
in the lithium nickel-cobalt-manganese-based composite oxide, a cobalt content based on 100 mol% of a total metal excluding lithium is about 20 mol% to about 25 mol%, optionally wherein:
in the lithium nickel-cobalt-manganese-based composite oxide, a manganese content based on 100 mol% of a total metal excluding lithium is about 20 mol% to about 25 mol%.

9. The positive electrode active material as claimed in any one of claims 1 to 8, wherein:
the second positive electrode active material is in a form of single particles.

10. The positive electrode active material as claimed in any one of claims 1 to 9, wherein:
a pellet density of the positive electrode active material is about 4.15 g/cc to about 4.25 g/cc.

11. A positive electrode, comprising:
a current collector; and
a positive electrode active material layer on the current collector,
wherein the positive electrode active material layer comprises the positive electrode active material as claimed in any one of claims 1 to 10.

12. The positive electrode as claimed in claim 11, wherein:
a mixture density of the positive electrode active material layer is about 4.2 g/cc to about 4.5 g/cc.

13. A rechargeable lithium battery, comprising:
the positive electrode as claimed in claim 11 or claim 12;
a negative electrode; and
an electrolyte.

14. The rechargeable lithium battery as claimed in claim 13, wherein:
(i) the second positive electrode active material is included in an amount of about 12 wt% to about 23 wt% based on a total of 100 wt% of the first positive electrode active material and the second positive electrode active material; or
(ii) the second positive electrode active material is included in an amount of about 15 wt% to about 20 wt% based on a total of 100 wt% of the first positive electrode active material and the second positive electrode active material; or
(iii) the second positive electrode active material is included in an amount of about 20 wt% to about 25 wt% based on a total of 100 wt% of the first positive electrode active material and the second positive electrode active material.

15. The rechargeable lithium battery as claimed in claim 13 or claim 14, wherein:
(i) in the lithium nickel-cobalt-manganese-based composite oxide, based on 100 mol% of a total metal excluding lithium, a cobalt content is about 20 mol% to about 30 mol%; or
(ii) in the lithium nickel-cobalt-manganese-based composite oxide, based on 100 mol% of a total metal excluding lithium, a cobalt content is about 20 mol% to about 25 mol%.
